# EUROPÄISCHE PATENTSCHRIFT

(11) **EP 2 465 467 B1**
(45) Veröffentlichungstag und Bekanntmachung des Hinweises auf die Patenterteilung: **25.10.2017**
(21) Anmeldenummer: 11193642.3
(22) Anmeldetag: 15.12.2011
(51) Int. Cl.: A61C 19/00, H05B 33/08, A61B 18/20

(54) **HANDSTÜCK MIT LICHTQUELLE**
HANDPIECE WITH LIGHT SOURCE
PIÈCE À MAIN AVEC SOURCE LUMINEUSE

(30) Priorität: 20.12.2010 EP 10196001
(43) Veröffentlichungstag der Anmeldung: 20.06.2012
(73) Patentinhaber: Ivoclar Vivadent AG, 9494 Schaan (LI)
(72) Erfinder: Benz, Oliver, 9487 Gamprin (LI); Tommasini, Dario, 7302 Mastrils (CH)
(74) Vertreter: Splanemann

(56) Entgegenhaltungen:
- EP-A1- 1 336 389
- EP-A1- 1 475 052
- EP-A2- 1 260 193
- WO-A2-2010/029519
- US-A- 6 140 776
- US-A1- 2006 245 187
- US-A1- 2010 254 149

## Beschreibung

Die Erfindung betrifft ein handgeführtes Dentalgerät, gemäß dem Oberbegriff von Anspruch 1.

Handgeführte Dentalgeräte mit einer Lichtquelle und einer Energiequelle wie einem Akkumulator sind seit langem in der Dentaltechnik bekannt. Ein Beispiel hierfür ist das aus der DE 42 11 230 A1 bekannte Dentalgerät, bei welchem die Lichtquelle über wiederaufladbare Akkumulatoren betrieben wird.

Kabellose Lichthärtgeräte sollen nach Möglichkeit nicht zu schwer sein.

Es ist das Bestreben der Zahnärzte und Zahntechniker, mit möglichst kurzen Polymerisationszyklen auszukommen. Hierzu stehen mittlerweile LED-Chips mit hoher Leistung zur Verfügung, die Lichtabgabezyklen von beispielsweise 20 oder 30 Sekunden ermöglichen.

Aus der DE 10 2004 033 699 A1 ist ein kabelloses Lichthärtgerät bekannt, bei dem ein Ultra-Cap-Kondensator als Energiespeicher eingesetzt wird. Dieser Ultra-Cap-Kondensator war in der Lage, die seinerzeit zur Verfügung stehenden LED-Chips mit ausreichend Energie zu versorgen, so dass 6 oder 7 Polymerisationszyklen möglich waren, bis der Ultra-Cap-Kondensator erneut aufgeladen werden musste.

Bei zu wenig Energie besteht die Problematik darin, dass die zur Verfügung stehende Ladungsmenge für einen Polymerisationszyklus nicht ausreicht, was dazu führen würde, dass nicht polymerisierte Monomere in den tieferen Schichten des Dentalrestaurationsteils verbleiben würden, die sehr kritisch gesehen werden, nachdem freie Radikale im Verdacht stehen, krebserregend zu wirken.

Dies wird insbesondere dadurch kritischer, da die Leistungen von LED's heutzutage bis zu 10 Watt erreichen, so dass auch bei einem einzigen Polymerisationszyklus die Gefahr besteht, dass die gespeicherte Ladungsmenge nicht ausreicht, wenn der dortige Ultra-Cap-Kondensator nicht ausreichend geladen ist.

Ein weiteres Beispiel für diese derartigen seit längerem bekannten Lichthärtgeräte mit Ultra-Cap-Kondensator ist aus der WO 2010/029519 zu ersehen. Auch bei dieser Lösung wird über ein Ladegerät der Ultra-Cap-Kondensator, der die aus dem Stand der Technik bekannten Batterien ersetzen soll, aufgeladen und soll dann die erwünschte Leistung für den Betrieb der Lichtquelle abgeben.

Gerade bei handgeführten, insbesondere bei stiftförmigen handgeführten Lichthärtgeräten ist der zur Verfügung stehende Raum für die Aufnahme des Ultra-Cap-Kondensators begrenzt, und das handgeführte Lichthärtgerät darf auch nicht zu schwer sein.

Es ist auch versucht worden, die spezifische Leistungsdichte dadurch zu erhöhen, dass Kondensatoren verwendet werden, deren Nennspannung exakt auf der Ladespannung liegt, um so eine möglichst große Kapazität zu realisieren. Nachteilig hierbei ist jedoch, dass keine Spannungsreserve zur Verfügung steht, und auch, dass bei Toleranzen der Kondensatoren diese, im Grunde hochgezüchteten elektronischen Bauteile, überlastet werden.

In Dentalpraxen würde eine Explosion eines Kondensators jedoch zu katastrophalen Folgen führen, denn die in dem Kondensator verwendeten Materialien sind hochgradig toxisch und würden dann ggf. vom Patienten über dessen Schleimhäute aufgenommen.

Ein weiteres Problem der seit etwa zehn Jahren bekannten Lichthärtgeräte mit Ultra-Cap-Kondensator besteht in der Notwendigkeit, die Verfügbarkeit eines bereitstehenden Lichthärtgeräts in der Zahnarztpraxis stets zu ermöglichen.

Wenn der Zahnarzt beispielsweise nach Vornahme einer Lichthärtung des zu polymerisierenden Dentalmaterials, das er in mehreren Schichten aufgebracht hat, wobei jede Schicht zumindest teilweise gehärtet wurde, feststellt, dass nunmehr die Endhärtung erfolgen sollte, steht ggf. im Ultra-Cap-Kondensator nicht mehr genügend Energie zur Verfügung.

Eine teilweise Lichthärtung bei ungenügend geladenen Kondensatoren hat jedoch zur Folge, dass dann lediglich die obersten Schichten gehärtet werden, und die unteren Schichten zunächst ungehärtet verbleiben. Diese ziehen sich jedoch dann später, bei der "Nachhärtung", zusammen, so dass die Dentalrestauration auch seitlich schrumpft, was zu der extrem unerwünschten Randspaltenbildung führt.

Daher ist es wichtig, dass auch für die Endhärtung, die gerade typischerweise länger dauern soll als die Teilhärtungen der einzelnen Inkrementschichten des Polymerisationsmaterials, ausreichend Energie zur Verfügung steht. Typischerweise hat jedoch der Ultra-Cap-Kondensator gerade dann, wenn er am höchsten gefordert würde, am wenigsten Energiereserven, was zu kritischen Situationen und Regressansprüchen an die Zahnärzte führen kann.

Um dies zu vermeiden, hat es sich eingebürgert, bei der Verwendung derartiger Lichthärtgeräte stets zwei Lichthärtgeräte zur Verfügung zu stellen, bei denen eines als Reserve für diese Situation bereit steht.

Dies ist andererseits mit deutlichen Mehrkosten verbunden.

Demgegenüber liegt der Erfindung die Aufgabe zugrunde, ein handgeführtes Dentalgerät gemäß dem Oberbegriff von Anspruch 1 zu schaffen, das kritische Situationen in Zahnarztpraxen besser vermeidet, und es erlaubt, auch mit lediglich einem Lichthärtgerät pro Behandlungsplatz des Zahnarztes auszukommen.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass überraschend durch die gleichzeitige Energieversorgung sowohl durch den Akkumulator als Energiequelle als auch durch den Doppelschicht-Kondensator stets sichergestellt, dass dieser sich in ausreichend aufgeladenem Zustand befindet, auch wenn mehr als fünf oder sechs Polymerisationszyklen durchgeführt werden, ohne das handgeführte Dentalgerät in der Ladestation abzustellen.

Hierbei lässt sich besonders günstig die Tatsache ausnutzen, dass der Akkumulator oder die Batterie als lokale Energiequelle im Dentalgerät eine besonders hohe spezifische Energiedichte hat, zumindest erheblich höher als der Ultra-Cap-Kondensator.

Die lokale Energiequelle wird von wenigstens einem insbesondere aufladbaren Akkumulator gebildet, der im Dentalgerät angeordnet ist.

Zumindest die lokale Energiequelle, aber ggf. auch der Kondensator, ist mit Hilfe eines Kabels und/oder elektrischen Kontakten und/oder einer an sich bekannten induktiven Schnittstelle mit einer Extern-Energiequelle in Verbindung bringbar ist, also beispielsweise einem Ladegerät, einem Netzteil oder einer sonstigen externen Energiequelle.

Insofern lassen sich die Vorteile der hohen Leistungsdichte des Kondensators und der hohen Energiedichte des Akkumulators besonders günstig kombinieren.

Erfindungsgemäß ist es vorgesehen, die lokale Energiequelle, wie beispielsweise ein Lithium-Ionen-Akkumulator oder ein anderer Akkumulator, mit mindestens einem zusätzlichen hochkapazitiven Doppelschicht-Kondensator zu kombinieren. Der von der Energiequelle aufgeladene Doppelschicht-Kondensator hat eine sehr hohe Leistungsdichte von beispielsweise 5 W/g und wirkt als Haupt-Energielieferant für die Lichtquelle.

Erfindungsgemäß wird die für die Polymerisation erforderliche Spannung durch die lokale Energiequelle aufrechterhalten, beispielsweise, indem dann, wenn die Ladungsmenge, die auf dem Doppelschicht-Kondensator gespeichert ist, verbraucht wird, die Energiequelle als Haupt-Spannungslieferant einspringt, und verhindert, dass die Lichtleistung absinkt.

Die Energiequelle hat bevorzugt eine recht hohe Energiedichte von beispielsweise 100 mWh/g, aber eine Leistungsdichte, die erheblich unter der Leistungsdichte des Doppelschicht-Kondensators liegt und beispielsweise 1 W/g beträgt.

Erfindungsgemäß ist es besonders günstig, dass die lokale Energiequelle gleichsam als Sicherheitsreserve zur Verfügung steht, auch dann, wenn der Kondensator durch eine mehrmalige Polymerisation entladen ist. Es ist möglich, dann die Steuerung so vorzunehmen, dass die Lichthärtezeit gegenüber dem voreingestellten Wert automatisch verlängert wird, um die geringere Lichtabgabe zu kompensieren.

Um die bevorzugte und günstige Potentialverteilung sicherzustellen, kann man bei Bedarf auch eine Spannungserhöhungsschaltung einsetzen.

Es versteht sich, dass es auch möglich ist, bei Aufladung des Akkumulators zugleich auch den Kondensator aufzuladen. Die Ladespannung beider lässt sich - auch im Verhältnis zueinander - in weiten Bereichen an die Erfordernisse anpassen. Beispielsweise kann der Doppelschicht-Kondensator (EDLC) eine Spannungsfestigkeit von 2,75 Volt haben und auf 2,6 Volt aufgeladen werden, während die Lithium-Ionen-Akkumulatorzellen je auf 1,25 Volt, also bei der Verwendung von 2 in Serie geschalteten Zellen, auf 2,5 Volt aufgeladen werden.

Erfindungsgemäß besonders günstig ist es, wenn bei einer Mehrzahl von Kondensatoren eine Spannungs- und Stromvergleichmäßigung über ein sogenanntes balancing system erfolgt, das sicherstellt, dass alle Kondensatoren je die gleiche Ladung haben. Dies ist auch realisierbar, wenn beispielsweise 2 Kondensatoren parallel und 2 in Serie geschaltet sind, also eine Gesamtanordnung von 4 Kondensatoren vorliegt.

Die Doppelschicht-Kondensatoren können eine beliebige geeignete Kapazität aufweisen. Typischerweise weist jeder Doppelschicht-Kondensator eine Kapazität von mindestens 1 F auf, wobei es aber auch möglich ist, eine Gesamtkapazität von beispielsweise 200 F aus 4 Doppelschicht-Kondensatoren je 50 F zur Verfügung zu stellen.

Besonders günstig ist es, dass der erfindungsgemäß als Primär-Energiespeicher verwendete Doppelschicht-Kondensator auch besonders geeignet ist, eine hohe Stromstärke abzugeben. So lässt sich beispielsweise im gepulsten Betrieb eine Zykluszeit von weniger als 10 Sekunden bei entsprechend hoher Strombeaufschlagung der LED-Chips realisieren, und eine Bestrahlungsstärke von beispielsweise 10 W/cm² ist erfindungsgemäß erreichbar, ohne dass die Gefahr besteht, dass eine nicht-vollständige Polymerisation vorgenommen wird.

Erfindungsgemäß läßt sich in diesem Zusammenhang die Tatsache ausnutzen, dass die Leistungsdichten von Doppelschicht-Kondensatoren um mindestens eine Größenordnung, je nach Auslegung um mehr als zwei Größenordnungen höher als diejenigen von Lithium-Ionen-Akkumulatoren sind.

Erfindungsgemäß besonders günstig ist es, dass durch die Kombination der hohen Leistungsdichte im Bereich der Doppelschicht-Kondensatoren und die hohe Energiedichte im Bereich der Lithium-Ionen-Akkumulatoren sowohl ein Hochstrom-Impulsbetrieb möglich ist, ohne den Lithium-Ionen-Akkumulator zu stark zu belasten, als auch ein im Verhältnis zur gespeicherten Energie geringes Gewicht des handgeführten Dentalgeräts.

Besonders günstig ist es, wenn auf dem Kühlkörper für die Lichtquelle quadratische LED-Chips, beispielsweise vier Chips direkt nebeneinander angebracht sind, die bei einer Betriebsspannung von 3,2 V arbeiten und durch die Parallelschaltung einer Stromfestigkeit von 4000 mA haben. Bei dieser Ausgestaltung ist es günstig, wenn die Doppelschicht-Kondensatoren eine Spannungsfestigkeit von 4 V haben und von den Akkumulatoren, von denen drei in Serien geschaltet sind, auf 3,6 V aufgeladen werden.

Dies hat den Vorteil, dass die Speisespannung für die LED-Chips dann stets unterhalb der maximal zulässigen Speisespannung von 3,8 V bleibt, und auch für den EDLC-Kondensator besteht eine Sicherheitsmarge hinsichtlich seiner Betriebsspannung, was seiner Lebensdauer signifikant zugute kommt.

Wenn die Lithium-Ionen-Akkumulatorzellen durch den Betrieb im Lichthärtezyklus bereits halb entladen sind, haben sie immer noch eine Betriebsspannung von 3 x 1,15 V, also 3,35 V, so dass auch hier eine Sicherheitsreserve gegenüber der typischen Betriebsspannung der LED-Chips von 3,2 V besteht.

Da eine insgesamt verkürzte Behandlungsdauer ermöglicht ist, ist auch die Wärmeableitung vereinfacht: Während bei einer Einschaltdauer von beispielsweise 30 Sekunden die Aufheizung über einen vergleichsweise längeren Zeitraum erfolgt, so dass sich ein gleichmäßig hohes Temperaturniveau einstellt, entsteht bei einer vergleichsweise kurzen Einschaltdauer von 10 Sekunden ein Temperaturpeak, der auch günstig über einen Wärmepuffer ableitbar ist. So kann beispielsweise das Substrat der LED-Chips als Kupferkörper mit einer vergleichsweise hohen Wärmekapazität ausgebildet sein. Als sekundärer Wärmepuffer lassen sich gegebenenfalls auch die Doppelschicht-Kondensatoren einsetzen, die - zwar auf einem geringeren Temperaturniveau - aber grundsätzlich auch eine Aufheizung von beispielsweise 20° C auf 50° C vertragen, die als Wärmepuffer-Kapazität einsetzbar ist.

Es ist günstig, wenn die Doppelschicht-Kondensatoren dem im vorderen Ende des Dentalgeräts insbesondere in der Nähe der Lichtquelle angeordnet sind. Die Akkumulatoren als lokale Energiequelle sind dann bevorzugt jenseits der Kondensatoren angeordnet, so dass sie thermisch noch weniger belastet werden.

Erfindungsgemäß besonders günstig ist es, dass ein Speisestrom der Lichtquelle aus dem Doppelschicht-Kondensator während eines Belichtungsvorganges mindestens den doppelten Wert des Speisestroms aus der Energiequelle hat.

Erfindungsgemäß besonders günstig ist es, dass bei ausgeschalteter Lichtquelle, der Doppelschicht-Kondensator von der Energiequelle auf deren Nennspannung geladen wird.

Erfindungsgemäß besonders günstig ist es, dass die Steuereinrichtung den Doppelschicht-Kondensator außerhalb des Belichtungsvorganges aus der Energiequelle auflädt, so dass deren Klemmenspannung stets auf einem möglichst hohen Wert gehalten wird.

Erfindungsgemäß besonders günstig ist es, dass eine Überwachungsschaltung für die Ladung oder die Spannung des Doppelschicht-Kondensators vorgesehen ist, mit welcher ein Belichtungsvorgang nur aktivierbar ist, wenn die Spannung und/oder die Ladung oberhalb eines vorgegebenen Schwellenwerts ist.

Erfindungsgemäß besonders günstig ist es, dass eine Überwachungsschaltung für die Ladung oder die Spannung des Doppelschicht-Kondensators vorgesehen ist, mit welcher ein Belichtungsvorgang auch dann aktivierbar ist, wenn der Doppelschicht-Kondensator noch nicht vollständig geladen und die Ladung jedoch oberhalb eines vorgegebenen Werts ist.

Erfindungsgemäß besonders günstig ist es, dass das Dentalgerät während des Belichtungsvorganges für eine vorgegebene Zeit eingeschaltet wird, die weniger als 3 Sekunden aber insbesondere etwa 1 Sekunde beträgt.

Erfindungsgemäß besonders günstig ist es, dass die Lichtquelle Licht mit einer Bestrahlungsstärke von 4.000 bis 20.000 mW/cm² abgibt.

Erfindungsgemäß besonders günstig ist es, dass die LED wenigstens einen LED-Chip aufweist, der- in an sich bekannter Weise auf einem Kühlkörper montiert ist, der insbesondere Kühlrippen aufweist, die mit einem Kühlluftstrom kühlbar sind, der insbesondere von einem Gebläse erzeugt wird.

Erfindungsgemäß besonders günstig ist es, dass eine gesonderte mit dem Doppelschicht-Kondensator zusammenwirkende Kühlvorrichtung vorgesehen ist, mit welcher insbesondere eine Konvektionskühlung für den Doppelschicht-Kondensator realisierbar ist. Erfindungsgemäß besonders günstig ist es, dass der Kühlluftstrom zwischen der Lichtquelle und dem Doppelschicht-Kondensator im Wesentlichen senkrecht zur Lichtaustrittsrichtung durch das Dentalgerät verläuft und somit insbesondere auch die Stromversorgungsleitungen der Lichtquelle kühlt.

Erfindungsgemäß besonders günstig ist es, dass getrennte Stromversorgungsleitungen sich zwischen der Lichtquelle und dem Doppelschicht- Kondensator sowie zwischen der Lichtquelle und der Energiequelle erstrecken, wobei die zum Doppelschicht-Kondensator führende Stromversorgungsleitung für einen Strom von 3 Ampere und die zur Energiequelle führende Stromversorgungsleitung für einen Strom von 1 Ampere ausgelegt ist.

Erfindungsgemäß besonders günstig ist es, dass der Doppelschicht-Kondensator aus mehreren Einzel-Kondensatoren besteht, die parallel und/oder seriell miteinander verbunden sind und zusammen mit einer Spannungs- und Stromvergleichmäßigungsschaltung ein Balancing-System bilden.

Erfindungsgemäß besonders günstig ist es, dass der Doppelschicht-Kondensator aus wenigstens einem Lithium-Ionen-Kondensator besteht.

Erfindungsgemäß besonders günstig ist es, dass das Dentalgerät lichtpolymerisierbares Dentalmaterial mit einem Germanium-Initiator und/oder anderen Photoinitiatoren unter Bildung von Inkrementschichtdicken von mindestens 4 mm des lichtpolymerisierbaren Dentalmaterials in weniger als 3 Sekunden lichthärtet, also besonders schnell.

Erfindungsgemäß besonders günstig ist es, dass es möglich ist, lichtpolymerisierbares Dentalmaterial, das einen Germanium-Initiator und/oder andere Photoinitiatoren aufweist, um Inkrementschichtdicken von mindestens 4 mm des lichtpolymerisierbaren Dentalmaterials in weniger als 2 Sekunden, insbesondere 1 Sekunde, teilzuhärten, also in einen halbfesten Zustand zu bringen, der die Aufbringung der nächsten Inkrementschicht erlaubt, und nach Aufbringung der letzten Inkrementschicht in weniger als 3 Sekunden fertigzuhärten.

Erfindungsgemäß besonders günstig ist es, dass das Lichthärtgerät einen insbesondere abnehmbaren Lichtleiter aufweist, der sich vor der Lichtquelle erstreckt.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig.1: eine schematische Ansicht eines erfindungsgemäßen handgeführten Dentalgeräts in einer Ausführungsform; und
- Fig. 2: eine schematische Ansicht einer Schaltung für das Dentalgerät in der Ausführung gemäß Fig. 1.

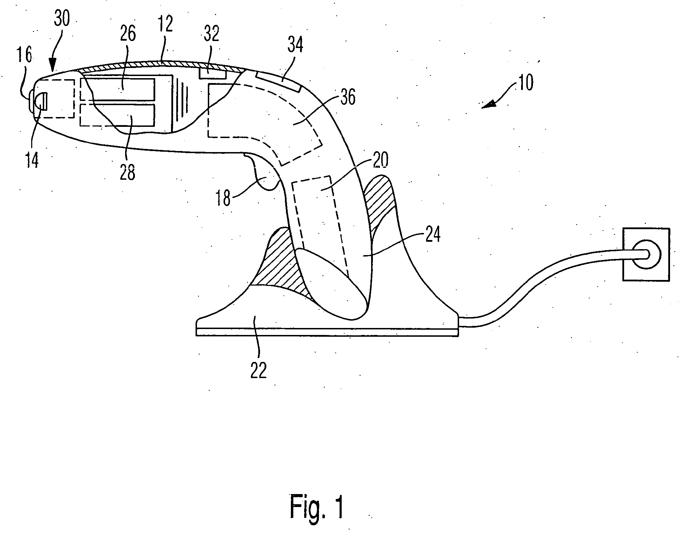

Das in Fig. 1 dargestellte Dentalgerät 10 weist ein Gehäuse 12 auf, das im wesentlichen in an sich bekannter Weise pistolenförmig ausgebildet ist. Das Gehäuse 12 nimmt an seinem vorderen Ende eine Lichtquelle 14 in Form einer LED auf deren emittiertes Licht gebündelt einem Lichtleiter zugeführt wird.

Das Gehäuse 12 nimmt ferner einen Schalter 18 auf, mit welchem das Dentalgerät 10 für die Lichtabgabe einschaltbar ist. Im Handgriff 24 des Gehäuses 12 ist in an sich bekannter Weise ein Akkumulator 20 als Energiequelle 20 vorgesehen, der bevorzugt aus einer Mehrzahl von einzelnen Akkumulatorzellen besteht. Für das Wiederaufladen des Akkumulators 20 ist eine Ladestation 22 vorgesehen, die eine Ausnehmung aufweist, in die der Handgriff 24 des Gehäuses 12 hineinpasst. Beim Einstellen des Handgriffs 24 in die Ausnehmung der Ladestation 22 werden zugleich elektrische Kontakte hergestellt, die die Spannungsversorgung des Dentalgeräts 10, das handgeführt ausgebildet ist, sicherstellen.

Erfindungsgemäß sind eine Mehrzahl von Doppelschicht-Kondensatoren 26, 28 in dem Gehäuse 12 angeordnet, wobei in Fig. 1 zwei Doppelschicht-Kondensatoren 26, 28 dargestellt sind. Die Kondensatoren 26, 28 sind ebenfalls im vorderen Bereich des Gehäuses 12 angeordnet, jedoch deutlich hinter der Lichtquelle 14. Die Lichtquelle 14 ist zu ihrer Kühlung auf einen Kühlkörper 30 montiert, der sich unmittelbar hinter der Lichtquelle 14 erstreckt. Bei Bedarf können die Kondensatoren 26, 28 in Wärmeleitverbindungen mit dem Kühlkörper 30 stehen, um so noch eine höhere Wärmekapazität zu ermöglichen, ohne dass die Kondensatoren 26, 28 von der Wärmeabgabe allzu stark beeinträchtigt würden. Kühlluftschichten sind oberhalb und unterhalb des Kühlkörpers 30 vorgesehen, die eine Konvektionskühlung über Kühlrippen des Kühlkörpers 30 ermöglichen.

In dem dargestellten Ausführungsbeispiel beträgt die Wärmekapazität der Doppelschicht-Kondensatoren 26, 28 mindestens das Doppelte, bevorzugt das Vierfache der Wärmekapazität des Kühlkörpers 30.

In an sich bekannter Weise nimmt das Gehäuse 12 an seiner Oberseite, Steuerungselemente auf. Hierzu gehört eine Ausgabe beispielsweise in Form eines Lautsprechers 32 und eine Bedieneinheit 34. Diese kann die eine LCD-Ausgabeeinheit oder einen Touch Screen für die Einstellung und das Auswählen eines Polymerisationszyklusses umfassen.

Zur Steuerung des Dentalgeräts 10 ist eine Steuereinrichtung 36 vorgesehen, die es ermöglicht, sämtliche Funktionen zu steuern und zu überwachen.

Auch wenn dies in Fig. 1 nicht dargestellt ist, versteht es sich, dass der Kühlkörper 30 in an sich bekannter Weise Kühlrippen aufweisen kann, und auch über ein ebenfalls nicht dargestelltes Gebläse in geeigneter Weise gekühlt werden kann.

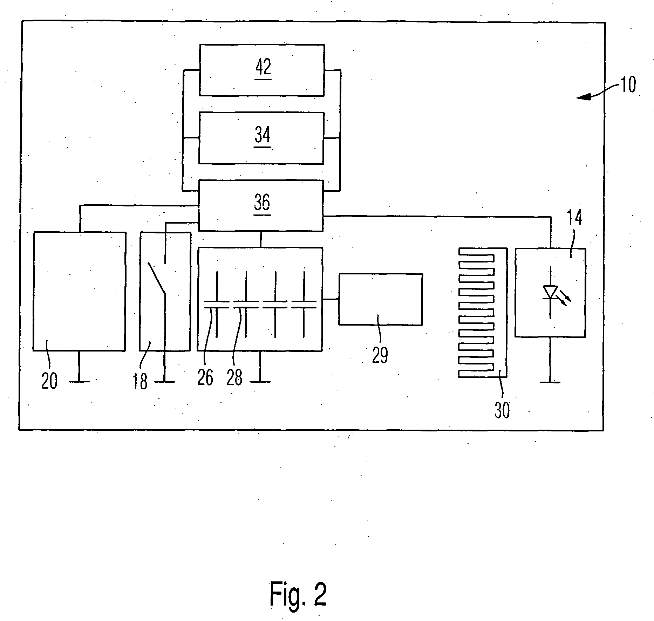

In Fig. 2 ist eine schematische Schaltungsanordnung für das Dentalgerät 10 dargestellt. Die Schaltungsanordnung zeigt die Lichtquelle 14, die als eine Mehrfachanordnung von LED-Chips ausgebildet ist und auf dem Kühlkörper 30 gelagert ist, beispielsweise auf einem gemeinsamen Kühlkörper 30 für mehrere LED-Chips.

Bevorzugt in Nähe hierzu ist die Mehrfachanordnung von Doppelschicht-Kondensatoren 26, 28 angeordnet, wobei hier, der Einfachheit halber, vier Doppelschicht-Kondensatoren dargestellt sind. Tatsächlich sind die Doppelschicht-Kondensatoren 26, 28 über eine Vergleichmäßigungsschaltung miteinander verbunden.

Die Darstellung gemäß Fig. 2 zeigt lediglich die Lichtabgabe, nicht hingegen die Aufladung der Doppelschicht-Kondensatoren 26, 28, die sowohl über die Akkumulatoren 20 als auch über die Ladestation 22 erfolgen kann.

Gemäß der Darstellung in Fig. 2 ist ein Blockschaltbild vorgesehen, das die wesentlichen Elemente des erfindungsgemäßen Lichthärtgeräts 10 zeigt. Die lokale Energiequelle 20 ist in Form eines Blockschaltbilds dargestellt und weist beispielsweise einen Akkumulator auf. Sie ist an eine Steuervorrichtung 36 angeschlossen, die als zentrale Einheit die Entladung des Akkumulators 20 einerseits und der Doppelschicht-Kondensatoren 26, 28 andererseits steuert, um die Lichtquelle 14, die ebenfalls an die Steuervorrichtung 36 angeschlossen ist, mit Energie zu versorgen. Hierzu weist die Steuereinrichtung 36 ein nicht dargestelltes Schaltglied auf, das die Umschaltung in der gewünschten Weise gewährleistet.

Die Auslösung des Polymerisationszyklusses erfolgt über einen Schalter 18, der ebenfalls mit der Steuereinrichtung 36 verbunden ist und einen programmierbaren Timer auslöst, der für eine vorgegebene Zeit Ladung aus den Doppelschicht-Kondensatoren 26, 28 und gleichzeitig aus den Akkumulatoren 20 der Lichtquelle 14 zuführt. Wenn die Ladung auf den Doppelschicht-Kondensatoren 26, 28 nicht mehr ausreicht, also wenn die Spannung an dieser Stelle zu gering geworden ist, erfolgt in erfindungsgemäß günstiger Ausgestaltung automatisch die alleinige Versorgung der Energiequelle durch Akkumulatoren, so dass der Akkumulator 20 verzögerungsfrei den Polymerisationszyklus fortsetzt. Die Kondensatoren 26, 28 können in diesem Zustand stromfrei an dem Entlade- bzw. Lichthärtzyklus teilnehmen, denn ihre Klemmenspannung entspricht dann der Akkumulatorspannung.

Die Doppelschicht-Kondensatoren 26, 28, von denen in der Ausführungsform gemäß Fig. 2 vier dargestellt sind, sind über eine Balancierschaltung 29 untereinander verbunden. Diese dient dazu, die gleichförmigkeit der Ladung auf allen vier Doppelschicht-Kondensatoren sicher zu stellen.

Die Steuereinrichtung 36 ist ferner mit einer Bedieneinheit 34 verbunden, die beispielsweise die Einstellung der zu programmierenden Polymerisationszeit oder beispielsweise die Anwahl des Kalibriermodus ermöglicht.

Ferner ist eine Ausgabeeinheit 42 vorgesehen, die den gewünschten Betriebsmodus und beliebige andere Parameter des Polymerisationszyklusses einerseits und des Dentalgeräts 10 andererseits darstellen kann.

Erfindungsgemäß ist es auch günstig, wenn der Speisestrom der Lichtquelle mindestens zu 2/3 aus den Kondensatoren 26, 28 stammt, und zu höchstens 1/3 aus den Akkumulatoren 20 und die hohe Leistungsdichte der Kondensatoren lässt sich so optimal ausnutzen. Es versteht sich, dass es auch möglich ist, das Speisestromverhältnis deutlich zu erhöhen, beispielsweise von 2 zu 1 auf 5 zu 1 oder auf noch höhere Werte, in Anpassung an die gewählte relative Dimensionierung der Akkumulatoren und der Kondensatoren. Im dargestellten Ausführungsbeispiel haben die Akkumulatoren etwa das gleiche Raumvolumen wie die Kondensatoren, wobei es sich versteht, dass das Raumvolumenverhältnis auch beispielsweise 1 zu 2 oder 2 zu 1 betragen kann.

Die Steuereinrichtung 36 sorgt dafür, dass bei Aufladung des handgeführten Dentalgeräts die Akkumulatoren auf ihre Nennspannung aufgeladen werden, also beispielsweise auf 3,75 V, und auch die Doppelschicht-Kondensatoren auf deren Arbeitsspannung. Diese kann sich ebenfalls auf 3,5 V belaufen, oder auch auf einen geringeren Wert wie beispielsweise 3,3 V.

Beim Lichthärten, also während des Einschaltens der Lichtquelle werden nun die Doppelschicht-Kondensatoren 26, 28 gleichzeitig mit den Akkumulatoren 20 entladen. Sobald das Lichthärtgerät kurzzeitig ausgeschaltet wird, werden die Kondensatoren 26, 28 von den Akkumulatoren mindestens teilweise wieder aufgeladen, so dass dann ihre hohe Leistungsdichte erneut zur Verfügung steht. Dies geht natürlich auf Kosten der Akkumulator-Klemmenspannung, die dann beispielsweise auf 3,6 V sinkt.

Auch bei mehreren intermittierend durchgeführten Belichtungszeiten innerhalb eines Lichthärtezyklusses erfolgt diese erfindungsgemäß besonders günstige Zwischenaufladung, auch ohne dass das Lichthärtgerät in die Ladestation eingesteckt wird.

Die Zwischenaufladung lässt sich noch effizienter dadurch realisieren, dass die Kondensatoren an sich bei einer geringeren Arbeitsspannung betrieben werden, beispielsweise 3,4 V, auf die sie von der Ladestation aufgeladen werden. Bei Ladungsabgabe der Kondensatoren 26, 28 im Betrieb, beispielsweise auf 3,2 V, steht dann eine höhere Spannungsdifferenz zwischen der Klemmenspannung der Akkumulatoren und der Klemmenspannung der Kondensatoren zur Verfügung, die sich günstig einsetzen lässt und eine Vergleichmäßigung der Lichtabgabe - über mehrere Einschaltzeiten des Dentalgeräts hinweg betrachtet - ermöglicht.

## Patentansprüche

1. Handgeführtes Dentalgerät, mit einem Gehäuse (12), einer Lichtquelle (14), insbesondere wenigstens einer LED, die mit einer Steuereinrichtung (36), einer Energiequelle (20) und mit wenigstens einem Energiespeicher in Form mindestens eines Doppelschicht-Kondensators (26, 28) in Verbindung steht, **dadurch gekennzeichnet, dass** die Energiequelle (20), welche von wenigstens einem insbesondere aufladbaren Akkumulator gebildet ist, und der wenigstens eine Energiespeicher im Gehäuse (12) des Dentalgeräts angeordnet sind und die Lichtquelle (14) gleichzeitig von der Energiequelle (20) und dem Doppelschicht-Kondensator (26, 28) gespeist werden kann.

2. Dentalgerät nach Anspruch 1, **dadurch gekennzeichnet, dass** zumindest die Energiequelle (20) mit Hilfe eines Kabels und/oder elektrischen Kontakten und/oder einer induktiven Schnittstelle mit einer Extern-Energiequelle in Verbindung bringbar ist.

3. Dentalgerät nach Anspruch 1, **dadurch gekennzeichnet, dass** ein Speisestrom der Lichtquelle (10) aus dem Doppelschicht-Kondensator (26, 28) während eines Belichtungsvorganges mindestens den doppelten Wert des Speisestroms aus der Energiequelle (20) hat.

4. Dentalgerät nach einem der vorhergehenden Ansprüche, **dadurch gekennzeichnet, dass** bei ausgeschalteter Lichtquelle (10) der Doppelschicht-Kondensator (26, 28) von der Energiequelle (20) auf deren Nennspannung geladen wird.

5. Dentalgerät nach einem der vorhergehenden Ansprüche, **dadurch gekennzeichnet, dass** eine Überwachungsschaltung für die Ladung und/oder die Spannung des Doppelschicht-Kondensators (26, 28) vorgesehen ist, mit welcher ein Belichtungsvorgang nur aktivierbar ist, wenn die Spannung und/oder die Ladung oberhalb eines vorgegebenen Schwellenwerts ist.

6. Dentalgerät nach einem der vorhergehenden Ansprüche, **dadurch gekennzeichnet, dass** eine Überwachungsschaltung für die Ladung und/oder die Spannung des Doppelschicht-Kondensators (26, 28) vorgesehen ist, mit welcher ein Belichtungsvorgang auch dann aktivierbar ist, wenn der Doppelschicht-Kondensator (26, 28) noch nicht vollständig geladen und die Ladung jedoch oberhalb eines vorgegebenen Werts ist.

7. Dentalgerät nach einem der vorhergehenden Ansprüche, **dadurch gekennzeichnet, dass** das Dentalgerät während des Belichtungsvorganges für eine vorgegebene Zeit eingeschaltet wird, die weniger als 3 Sekunden, aber insbesondere etwa 1 Sekunde beträgt.

8. Dentalgerät nach einem der vorhergehenden Ansprüche, **dadurch gekennzeichnet, dass** die Lichtquelle Licht mit einer Bestrahlungsstärke von 4.000 bis 20.000 mW/cm2 abgibt.

9. Dentalgerät nach einem der vorhergehenden Ansprüche, **dadurch gekennzeichnet, dass** die LED wenigstens einen LED-Chip aufweist, der in an sich bekannter Weise auf einem Kühlkörper montiert ist, der Kühlrippen aufweist, die insbesondere mit einem Kühlluftstrom kühlbar sind, der insbesondere von einem Gebläse erzeugt wird.

10. Dentalgerät nach einem der vorhergehenden Ansprüche, **dadurch gekennzeichnet, dass** eine gesonderte mit dem Doppelschicht-Kondensator (26, 28) zusammenwirkende Kühlvorrichtung vorgesehen ist, mit welcher insbesondere eine Konvektionskühlung für den Doppelschicht-Kondensator (26, 28) realisierbar ist.

11. Dentalgerät nach einem der vorhergehenden Ansprüche, **dadurch gekennzeichnet, dass** der Kühlluftstrom zwischen der Lichtquelle und dem Doppelschicht-Kondensator (26, 28) im Wesentlichen senkrecht zur Lichtaustrittsrichtung durch das Dentalgerät verläuft und somit insbesondere auch die Stromversorgungsleitungen der Lichtquelle kühlt.

12. Dentalgerät nach einem der vorhergehenden Ansprüche, **dadurch gekennzeichnet, dass** der Doppelschicht-Kondensator (26, 28) aus mehreren Einzel-Kondensatoren besteht, die parallel und/oder seriell miteinander verbunden sind und zusammen mit einer Spannungs- und Stromvergleichmäßigungsschaltung ein Balancing-System bilden.

13. Dentalgerät nach einem der vorhergehenden Ansprüche, **dadurch gekennzeichnet, dass** der Doppelschicht-Kondensator aus wenigstens einem Lithium-Ionen-Kondensator (26,28) besteht.

## Claims

1. A hand-guided dental apparatus having a housing (12), a light source (14), especially at least a LED, Which is connected with a control means (36), an energy source (20) and at least one energy storage In the form of at least one double layer capacitor (26, 28), **characterized in that** the energy source (20), which is formed by at least one, especially rechargeable accumulator and the at least one energy storage is arranged in the housing (12) of the dental apparatus and the light source (14) may simultaneously be fed by the energy source (20) and the double layer capacitor (26, 28).

2. The dental apparatus according to claim 1, **characterized in that** at least the energy source (20) is connectable to an external energy source with the help of a cable and/or electrical contacts and/or an Inductive interface.

3. The dental apparatus according to claim 1, **characterized in that**, during an Illumination procedure, a feed current of the light source (10) from the double layer capacitor (26, 28) has at least the double value of the feed current from the energy source (20).

4. The dental apparatus according to one of the preceding claims, **characterized in that**, with the light source (10) being deactivated, the double layer capacitor (26, 28) Is charged by the energy source (20) to the nominal voltage thereof.

5. The dental apparatus according to one of the preceding claims, **characterized In that** a watch dog circuit for the charge and/or the voltage of the double layer capacitor (26, 28) is provided, by means of which an illumination procedure is activatable not before the voltage and/or the charge exceeds a preset threshold value.

6. The dental apparatus according to one of the preceding claims, **characterized in that** a watch dog circuit for the charge and/or the voltage of the double layer capacitor (26, 28) is provided, by which an illumination procedure Is even activatable if the double layer capacitor (26, 28) Is not yet completely recharged and the charge, however, is above a preset value.

7. The dental apparatus according to one of the preceding claims, **characterized in that** the dental apparatus, during the illumination procedure, is activated for a preset time, which is less than 3 seconds, but Is especially approximately 1 second.

8. The dental apparatus according to one of the preceding claims, **characterized in that** the light source emits light having an irradiance of 4,000 to 20,000 mW/cm².

9. The dental apparatus according to one of the preceding claims, **characterized In that** the LED has at least one LED chip, which is mounted onto a cooling body in a manner known per se, which comprise cooling ribs, which especially are coolable with a cooling air stream, which Is generated especially by a blower.

10. The dental apparatus according to one of the preceding claims, **characterized in that** a separate cooling apparatus cooperating with the double layer capacitor (26,28) is provided, by which especially a convection cooling for the double layer capacitor (26, 28) is realizable.

11. The dental apparatus according to one of the preceding claims, **characterized In that** the cooling air stream between the light source and the double layer capacitor (26, 28) essentially extends perpendicular to the light exit direction through the dental apparatus, thereby also cooling especially the power supply line.

12. The dental apparatus according to one of the preceding claims, **characterized in that** the double layer capacitor (26, 28) consists of multiple single capacitors, which are connected to each other in parallel and/or in series and together with a voltage and current equalizing circuits forming a balancing system.

13. The dental apparatus according to one of the preceding claims, **characterized in that** the double layer capacitor consists of at least one lithium ion capacitor (26, 28).

## Revendications

1. Appareil de technique dentaire à commande manuelle, avec un boîtier (12), une source de lumière (14), en particulier au moins une LED, qui est reliée avec un dispositif de commande (36), une source d'énergie (20) et avec au moins un stockage d'énergie sous forme d'au moins un condensateur à double-couche (26, 28), **caractérisé en ce que** la source d'énergie (20), qui est formé par au moins une batterie en particulier rechargeable, et ledit au moins un stockage d'énergie est disposé dans le boîtier (12) de l'appareil de technique dentaire et la source de lumière (14) peut être alimenté en même temps par la source d'énergie (20) et le condensateur à double-couche (26, 28),

2. Appareil de technique dentaire selon la revendication 1, **caractérisé en ce qu'**au moins la source d'énergie (20) peut être relié avec une source d'énergie externe à l'aide d'un câble et/ou des contacts électriques et/ou une interface inductive.

3. Appareil de technique dentaire selon la revendication 1, **caractérisé en ce qu'**un courant d'alimentation de la source de lumière (10) à partir du condensateur à double couche (26, 28) pendant un processus d'exposition a au moins deux fois la valeur du flux d'alimentation à partir de la source d'énergie (20).

4. Appareil de technique dentaire selon l'une des revendications précédentes, **caractérisé en ce que**, lorsqu'une source lumineuse (10) est éteinte le condensateur à double couche (26,28) est chargé à partir de la source d'énergie (20) à sa tension nominale.

5. Appareil de technique dentaire selon l'une des revendications précédentes, **caractérisé en ce qu'**un circuit de surveillance est fourni pour la charge et/ou la tension du condensateur à double couche (26, 28), avec lequel un processus d'exposition ne peut être activé que si la tension et/ou la charge est supérieure à un seuil prédéterminé.

6. Appareil de technique dentaire selon l'une des revendications précédentes, **caractérisé en ce qu'**un circuit de surveillance est fourni pour la charge et/ou la tension du condensateur à double couche (26, 28), avec lequel un processus d'exposition peut être activé même lorsque le condensateur à double-couche (26, 28) n'es pas encore entièrement chargée mais que la charge est néanmoins supérieure à une valeur spécifiée.

7. Appareil de technique dentaire selon l'une des revendications précédentes, **caractérisé en ce que** l'appareil dentaire est allumé pendant le processus d'exposition pendant une durée prédéterminée, qui est de moins de 3 secondes, mais en particulier environ 1 seconde.

8. Appareil de technique dentaire selon l'une des revendications précédentes, **caractérisé en ce que** la source lumineuse émet de la lumière d'une intensité d'irradiation de 4.000 à 20.000 mW/cm².

9. Appareil de technique dentaire selon l'une des revendications précédentes, **caractérisé en ce que** la LED présente au moins une puce LED, qui est montée de manière connue en sol chemin sur un dissipateur de chaleur, qui présente des ailettes de refroidissement qui peuvent être refroidies avec en particulier un flux d'air de refroidissement, qui est produit notamment par un ventilateur.

10. Appareil de technique dentaire selon l'une des revendications précédentes, **caractérisé en ce qu'**est fournie un dispositif de refroidissement distinct coopérant avec le condensateur à double-couche (26, 28), avec lequel il est possible d'obtenir en particulier un refroidissement par convection pour le condensateur à double-couche (26, 28).

11. Appareil de technique dentaire selon l'une des revendications précédentes, **caractérisé en ce que** le flux d'air de refroidissement procède entre la source lumineuse et le condensateur à double-couche (26, 28) essentiellement perpendiculaire au sens de la sortie de la lumière à travers l'appareil de technique dentaire et refroidit ainsi en particulier également les câbles d'alimentation de la source de lumière.

12. Appareil de technique dentaire selon l'une des revendications précédentes, **caractérisé en ce que** le condensateur à double couche (26, 28) se compose de plusieurs condensateurs individuels qui sont reliés entre eux en parallèle ou en série et ensemble avec tension et avec un circuit d'homogénéisation du courant forment un système de répartition de charge.

13. Appareil de technique dentaire selon l'une des revendications précédentes, **caractérisé en ce que** le condensateur à double couche consiste en au moins un condensateur lithium-ion (28, 28).
